# EUROPÄISCHE PATENTSCHRIFT

(11) **EP 3 853 956 B1**
(45) Veröffentlichungstag und Bekanntmachung des Hinweises auf die Patenterteilung: **05.07.2023**
(21) Anmeldenummer: 19769985.3
(22) Anmeldetag: 09.09.2019
(51) Int. Cl.: H02G 11/02, B60L 53/302, H02G 11/00

(54) **LEITUNGSZUFÜHRUNGSANORDNUNG**
CABLE FEEDING ARRANGEMENT
DISPOSITIF D'ALIMENTATION D'UN CÂBLE

(30) Priorität: 17.09.2018 DE 102018122663
(43) Veröffentlichungstag der Anmeldung: 28.07.2021
(73) Patentinhaber: Stemmann-Technik GmbH, 48465 Schüttorf (DE)
(72) Erfinder: BÜNKER, Ludger, 48488 Emsbüren (DE); EVENBLIJ, Simon Hendrik, 48531 Nordhorn (DE)
(74) Vertreter: Griepenstroh, Jörg
(86) Internationale Anmeldenummer: PCT/DE2019/100805
(87) Internationale Veröffentlichungsnummer: WO 2020/057693

(56) Entgegenhaltungen:
- EP-A2- 2 551 145
- CN-A- 104 944 213
- DE-A1-102017 100 638
- JP-A- 2011 160 615
- JP-A- 2012 090 407
- US-A1- 2010 277 127

## Beschreibung

Die Erfindung betrifft eine Leitungszuführungsanordnung gemäß den Merkmalen des Patentanspruchs 1.

Elektrisch angetriebene Kraftfahrzeuge, insbesondere Nutzfahrzeuge und PKWs müssen regelmäßig Ladestationen anfahren oder in ein Depot zurückgerufen werden, um dort geladen zu werden. Wenn es möglich ist, wird nicht nur bei nächtlichen Stillstandzeiten, sondern z.B. auch beim Be- und Entladen eines Lastkraftwagens eine bewegliche Leitung an das Kraftfahrzeug angeschlossen, um die Akkus zu laden.

Die Be- und Ladezeiten von Nutzfahrzeugen sind in der Regel kurz, um einen Akku vollständig zu laden. Je mehr Strom in kurzer Zeit übertragen werden soll, desto größer muss der Leitungsquerschnitt an der Ladestation sein. Die Leitung, die von der Ladestation zum Kraftfahrzeug geführt wird, ist flexibel und in der Regel so schwer ist, dass sie auf dem Boden liegt. Dadurch kann es auf Dauer zu Beschädigungen an der Leitung kommen. Die Kupplungen werden stark belastet. Eine herkömmliche Ladestation kann zudem oftmals nicht in Fahrzeugnähe aufgestellt werden, da entweder der Platz nicht vorhanden ist oder weil die Ladestation vom Nutzfahrzeug an- oder umgefahren werden kann. Die Ladeleitung müsste dann sehr lang sein. Die Ladeleitung ist eine Stolperfalle für den Benutzer der Ladestation.

Ferner ist zu berücksichtigen, dass die großen Leitungsquerschnitte die Handhabung der Leitungen stark erschweren. Es ist bekannt, Leitungen zu kühlen. Dann kann der Querschnitt der metallischen Leitung reduziert werden und damit auch das Gewicht gesenkt werden. Durch die Kühlung wird die Leitung jedoch etwas sperriger. Auch muss berücksichtigt werden, dass durch die Kühlung selbst Gewicht hinzukommt.

Zum Stand der Technik ist auf die DE 10 2017 100 638 A1 hinzuweisen. Es wird eine Ladestation für Elektrofahrzeuge offenbart, die ein Ladekabel mit einem Ladestecker hat. Das Ladekabel hängt über ein Gewichtsausgleichsmodul längsverschiebbar an einer Laufschiene, um die Handhabung des Ladekabels zu vereinfachen.

Die JP 2011 160615 A offenbart eine Vorrichtung zum Laden eines Kraftfahrzeuges, bei welcher im Deckenbereich einer Garage ein Schienensystem angeordnet wird, an welchem eine Kabeltrommel befestigt ist. Die Kabeltrommel kann über das Schienensystem in die gewünschte Position gebracht werden. Das Ladekabel wird von der Kabeltrommel nach unten gezogen und kann in das Kraftfahrzeug eingesteckt werden. Ist der Ladevorgang abgeschlossen, kann die Kabeltrommel das Kabel wieder aufwickeln, sodass es nicht auf dem Boden liegt.

Die EP 2 551 145 A2 offenbart eine mobile Ladestation für Elektrofahrzeuge, die innerhalb einer Garage hängend an einem Schienensystem mit Transportschienen verlagert werden kann. Die Transportschiene dient als Stromschiene. Die Ladeeinheit kann aus der Transport- bzw. Stromschiene ausgehängt werden und an einen anderen Ort getragen werden, beispielsweise um ein anderes Kraftfahrzeug zu laden. Eine solche mobile Ladestation soll ein Gewicht von höchstens 10 kg, insbesondere höchstens 5 kg haben, sodass die mobile Ladestationen von einem Benutzer oder robotisch von einem Magazin zu der Transportschiene oder von einer ersten Transportschiene zu einer zweiten Transportschiene getragen bzw. transportiert werden kann. Das angestrebte geringe Gewicht führt dazu, dass die Leitungsquerschnitte aus Gewichtsgründen begrenzt sind.

Die US 2010/277127 A1 offenbart eine stationäre Ladestation. Die Ladekabel sollen aktiv gekühlt werden. Daher ist eine zusätzliche Luftkühlung vorgesehen. Bei diesem System muss das Fahrzeug nah an der lokalen Station positioniert werden. Zudem kann das Kabel, das auch aufgewickelt werden kann, auf dem Boden liegen und ist dadurch bereichsweise ungeschützt.

Die CN 104 944 213 A offenbart eine Leitungstrommel, bei welcher mittels einer kombinierten Leitung elektrische Energie sowie Flüssigkeiten übertragen werden.

Aus der JP 2012 090407 A ist eine Ladeneinrichtung bekannt, bei welcher an einem horizontal verschwenkbaren Ausleger das Ladekabel geführt wird, sodass es nicht über den Boden schleift. Bei Nichtgebrauch kann ein Ladestecker am Ende des Kabels an einer Basisstation, die den Ausleger trägt eingehängt werden.

Hiervon ausgehend liegt der Erfindung die Aufgabe zugrunde, ein Leitungszuführungssystem für elektrisch angetriebene Kraftfahrzeuge aufzuzeigen, welches die Handhabung vereinfacht und welches gleichzeitig die Durchleitung größerer Ströme ermöglicht.

Diese Aufgabe ist mit einer Leitungszuführungsanordnung gemäß den Merkmalen des Patentanspruchs 1 gelöst.

Die Unteransprüche betreffen vorteilhafte Weiterbildungen der Erfindung.

Die erfindungsgemäße Leitungszuführungsanordnung für elektrisch angetriebene Kraftfahrzeuge besitzt eine elektrische Leitung zum Laden eines Energiespeichers des Kraftfahrzeuges. Der Energiespeicher wird nachfolgend auch als Akkumulator, kurz Akku, bezeichnet. Die elektrische Leitung ist mit einer Energiequelle verbunden, über welche der zu transportierende Strom bereitgestellt wird. Bei der Erfindung ist vorgesehen, dass die elektrische Leitung an einem Tragarm angeordnet ist. Der Tragarm besitzt eine Laufkatze für die Positionierung der Leitung, die zu dem Kraftfahrzeug geführt werden soll. Der Tragarm ist in Horizontalrichtung verlagerbar oder es ist die Laufkatze relativ zum Tragarm in Horizontalrichtung verlagerbar. Dadurch ist es möglich, die Leitung in eine bevorzugte Anschlussposition zu dem zu ladenden Kraftfahrzeug zu bringen.

Die Laufkatze befindet sich in einer Höhe oberhalb des zu ladenden Kraftfahrzeuges. Die Laufkatze hat die Funktion, ein freies Ende der Leitung freizugeben, das von der Laufkatze an dem Tragarm herunterhängt. Diese Leitung wird von oben kommend zum Laden an das Kraftfahrzeug angeschlossen. Die lichte Höhe unterhalb der Laufkatze, die eine freie Durchfahrt für PKWs und LKWs erlaubt, orientiert sich an den nationalen Vorschriften für die Abmessungen von Kraftfahrzeugen. Die lichte Höhe beträgt mindestens 4 m, bevorzugt mindestens 4,5 m.

Der wesentliche Vorteil der Erfindung ist, dass die elektrische Leitung getragen wird und ohne Kontakt mit dem Boden von oben zugeführt wird. Die Leitung kann horizontal längs und quer zum Fahrzeug in die richtige Position gebracht werden. Sie muss nicht quer über das Kraftfahrzeug gelegt werden oder um das Kraftfahrzeug herum geführt werden, sondern kann bei entsprechender Positionierung der Laufkatze senkrecht von oben kommend an den Ladeanschluss angeschlossen werden. Hierzu besitzt das freie Ende der Leitung einen Stecker oder eine Kupplung. Die Orientierung von Stecker und Kupplung kann von der Senkrechten abweichen. Die elektrische Leitung ist flexibel.

Die Leitung ist zudem flüssigkeitsgekühlt. Die Flüssigkeitskühlung ermöglicht es, kleinere Querschnitte zu verwenden. Die Leitung ist dadurch leichter und flexibler. Die Flüssigkeitskühlung bedingt zwar einen etwas höheren technischen Aufwand für eine solche Leitungszuführungsanordnung, im Ergebnis ist die Handhabung der Leitung jedoch einfacher, weil die Leitung leichter und damit auch flexibler ist.

Wenn der Leitungsquerschnitt nicht reduziert wird, ist es bei gleichbleibendem Leitungsquerschnitt möglich, 30 - 50 % mehr Strom zu übertragen. Erfindungsgemäß ist vorgesehen, dass der Leitungsquerschnitt vorzugsweise nicht reduziert wird, um größere Ströme übertragen zu können. Er kann sogar vergrößert werden. Mit der Erfindung können Akkus in kürzerer Zeit geladen werden, ohne dass die Handhabung der elektrischen Leitung durch die großen Querschnitte erschwert ist. Auf diese Weise ist es möglich, einen Lkw beispielsweise während des Be- und Entladens in sehr kurzer Zeit mit einer großen Menge elektrischer Energie zu versorgen, ohne dass die Gefahr besteht, dass die elektrische Leitung überfahren wird oder dass Beschädigungen an der Ladestation selber erfolgen, beispielsweise durch Rangierfehler. Nach dem Laden kann das freie Ende der elektrischen Leitung wieder entkoppelt und angehoben werden und in einem Leitungsspeicher an der Laufkatze oder an dem Tragarm aufgenommen werden.

Die Erfindung berücksichtigt auch die Möglichkeit, dass die Leitung bis zu einer bestimmten Länge frei von dem Tragarm bzw. von der Laufkatze herunterhängen kann, um von einem Bediener leicht erreicht werden zu können. Das hat allerdings den Nachteil, dass beim Rangieren die Gefahr besteht, mit der Leitung zu kollidieren. Vorzugsweise wird daher das, dass freie Ende der Leitung nach dem Laden zumindest soweit in Richtung zur Laufkatze eingezogen, dass ein Fahrzeug frei unterhalb der Leitung rangieren kann.

Die Leistungszuführungsanordnung umfasst mindestens eine Schlauchtrommel zur Zuleitung und zur Ableitung einer Kühlflüssigkeit zur und von der elektrischen Leitung; Die Schlauchtrommel ist insbesondere in der Nähe einer Schwenkachse des Tragarms angeordnet. Die Schlauchtrommel hat die Funktion, der elektrischen Leitung die benötigte Kühlflüssigkeit bereitzustellen, unabhängig davon, von welcher Position am Tragarm die elektrische Leitung heruntergelassen wird. Die Stromzuführung kann auch bei Verwendung einer Schlauchtrommel über eine Stromschiene erfolgen. Vorzugsweise erfolgt über die Schlauchtrommel auch gleichzeitig die Übertragung der elektrischen Energie, sodass die Schlauchtrommel gleichzeitig auch eine Leitungs- oder Kabeltrommel ist. Die Schlauchtrommel besitzt in diesem Fall einen Schleifringübertrager zur Übertragung der elektrischen Energie.

Der Tragarm ist insbesondere um eine vertikale Schwenkachse verschwenkbar. Der Tragarm fungiert wie der Ausleger eines Turmdrehkrans. Die vertikale Schwenkachse befindet sich in oder an einem Turm bzw. einer Tragsäule, an welcher der Tragarm befestigt ist. Der Tragarm kann einseitig quer von der Trägersäule abstehen. Es ist auch möglich, auf der der Schwenkachse gegenüberliegenden Seite ein Gegengewicht anzuordnen. Der Tragarm kann insbesondere in Gitterbauweise konfiguriert sein. Abspannmittel oberhalb des Tragarms verhindert ein Durchbiegen und ermöglichen eine leichte und gleichzeitig hoch belastbare Konstruktion mit weiter Auslage. Eine solche Leitungszuführungsanordnung kann im Außenbereich angeordnet sein. Der Tragarm besitzt eine Länge, die vorzugsweise größer ist als die typische Fahrzeugbreite von etwa 2,5 m. Er besitzt beispielsweise eine Länge von 4-8 m, sodass eine ausreichende Rangierfreiheit gegenüber der zentralen Tragsäule verbleibt.

Der Tragarm selber befindet sich im Abstand zum Boden bzw. zur Fahrbahn. Der Tragarm kann auch an einer Tragkonstruktion befestigt sein, die den Tragarm nicht von unten stützt, sondern von oben hält, beispielsweise an einer Deckenkonstruktion z.B. in einer Lagerhalle oder auch einer Fahrzeughalle.

Eine alternative Ausführungsform umfasst eine Rahmenkonstruktion an welcher der Tragarm linear verlagerbar ist. Durch eine lineare Verschiebung des Tragarms und eine gleichzeitige Verlagerung der Laufkatze entlang des Tragarms ist ebenfalls eine individuelle Positionierung der elektrischen Leitung möglich. Der linear verlegbare Tragarm kann an seinen beiden Enden gelagert sein. Die Erfindung erfasst Leitungszuführungsanordnungen, die nach dem Prinzip eines Säulenschwenkkrans bzw. eines Portalkrans arbeiten. Der Tragarm kann entlang von Kranbahnen oder Schienen im Bereich der Wände oder im Bereich von Stützpfeilern einer Halle geführt werden. Der Tragarm kann an derartigen als Tragsäule dienenden Stützpfeilern befestigt sein.

Die Verlagerung des Tragarmes und/oder der Laufkatze erfolgt in einer vorteilhaften Weiterbildung der Erfindung durch jeweils einen motorischen Antrieb. Beispielsweise kann an einer Tragsäule eine Bedieneinheit angeordnet sein, über welche der Tragarm und die Laufkatze in die richtige Position verfahren werden können. Auch das Absenken der elektrischen Leitung von der Laufkatze nach unten kann über einen elektrischen Antrieb erfolgen. Alle Antriebe sind fernsteuerbar. Eine drahtlose Fernsteuerung kann vorgesehen sein.

Es ist auch möglich, dass von der Laufkatze ein Seil herunterhängt, das nicht beschädigt werden kann, wenn ein Fahrzeug gegen dieses Seil fährt und auch keinen Schaden an dem Fahrzeug verursacht. Mit diesem Seil kann die Laufkatze manuell in die richtige Position gebracht werden. Wenn man stärker an dem Seil zieht, kann auch die elektrische Leitung heruntergezogen und angeschlossen werden. Es ist eine Leitungstrommel für die Leitung an der Laufkatze angeordnet. Das Absenken und Anheben des freien Endes der Leitung kann durch einen Antrieb erfolgen. Bei der Leitungstrommel handelt sich beispielsweise um eine Motorleitungstrommel. Um das Anheben des relativ schweren Kabels zu erleichtern, kann es sich auch um eine Federleitungstrommel handeln oder eine Gegengewichtstrommel. Auch die Kombination mit einem Gewichtsausgleich bzw. mit einem Federzug oder einem sogenannten Balancer ist möglich, um die schwere elektrische Leitung mit nur geringem Kraftaufwand leicht in die Anschlussposition bzw. die Ausgangsposition zu bringen. Für die Stromübertragung kann eine Kabelwagenanlage oder eine Stromschiene entlang des Tragarms verlaufen. Über die Stromschiene ist die Laufkatze elektrisch angeschlossen, um die Leitung, die bei der Laufkatze beginnt, mit Strom aus einer elektrischen Energiequelle zu verbinden.

Bei einem System mit einer Kabelwagenanlage werden Kabel und/oder Schläuche in Bögen geführt. Kabel und Schläuche sind in übersichtlicher Weise an dem Tragarm aufgehängt, sodass sie keine Hindernisse im Verkehrsweg der Kraftfahrzeuge sind. Wichtig ist, dass der Tragarm hoch genug montiert ist, sodass bei einem Kabelwagen- oder auch Kabelschlepp-Systeme die einzelnen Schlaufen sich immer in einer Höhe befinden, die keine Kollision mit dem Kraftfahrzeug zulässt.

Die Kühlung des Kühlfluides erfolgt in einem Wärmetauscher. Dieser Wärmetauscher ist entfernt von der Laufkatze angeordnet, beispielsweise stationär an der Tragsäule. Damit das Kühlfluid zirkulieren kann, wickelt die Schlauchtrommel einen Schlauch als Vorlauf und einen als Rücklauf.

Wenn beispielsweise eine Stromschiene den nötigen Strom zu der Laufkatze überträgt, ist eine weitergehende Kühlung nur im Bereich der elektrischen Leitung an der Laufkatze erforderlich. Das Kühlfluid zirkuliert in dem Mantel der elektrischen Leitung und wird unmittelbar an dem Wärmetauscher der Laufkatze gekühlt.

Unter bestimmten Umständen, beispielsweise aus akustischen Gründen, kann eine Anordnung des Wärmetauschers in der Nähe der Tragsäule zweckmäßig sein. Der Wärmetauscher kann auch im Abstand zur Tragsäule und im Abstand zum Tragarm angeordnet sein. Beispielsweise ist es bei mehreren Tragarmen bzw. Leitungszuführungsanordnungen möglich, einen gemeinsamen zentralen Wärmetauscher vorzusehen.

Die Erfindung hat den wesentlichen Vorteil, dass die schwere elektrische Leitung bei Nichtgebrauch kein Hindernis ist. Eine Beschädigung der Leitung ist dadurch wesentlich unwahrscheinlicher. Im Rangierbereich der Kraftfahrzeuge gibt es keine Hindernisse, wie z. B. bodenseitige Ladesäulen. Durch gekühlte Leitungen kann in kürzerer Zeit deutlich mehr Strom übertragen werden. Die ladebedingten Stillstandzeiten der Kraftfahrzeuge werden verringert und der Ausnutzungsgrad der Kraftfahrzeuge wird verbessert.

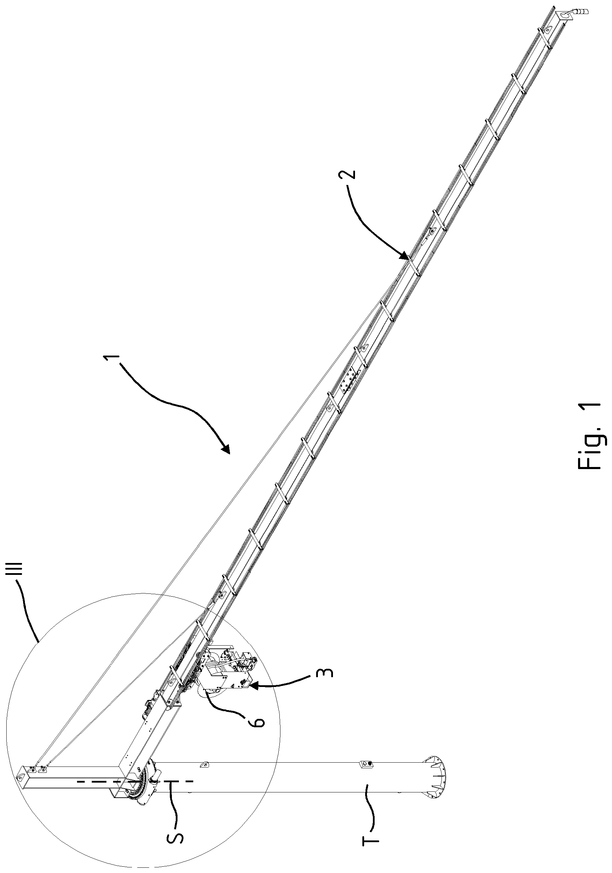

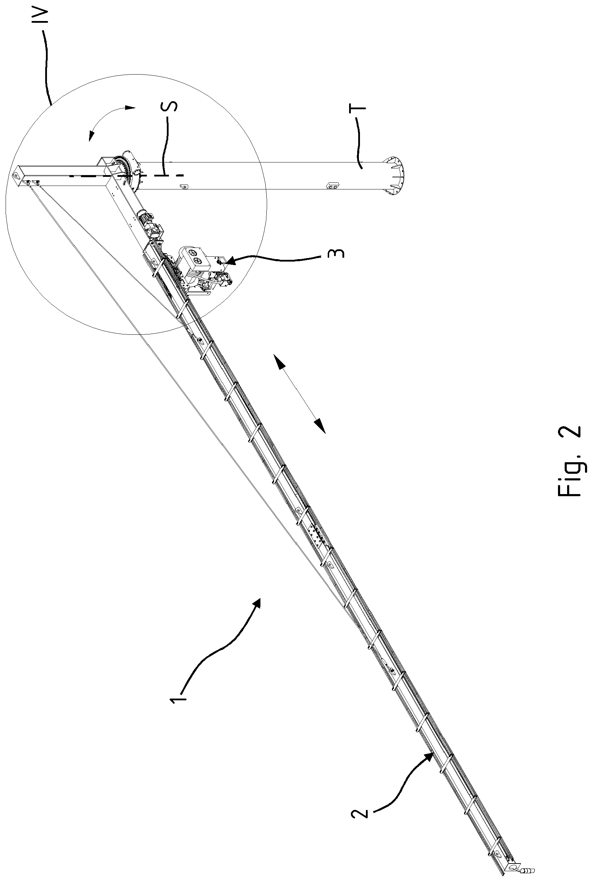

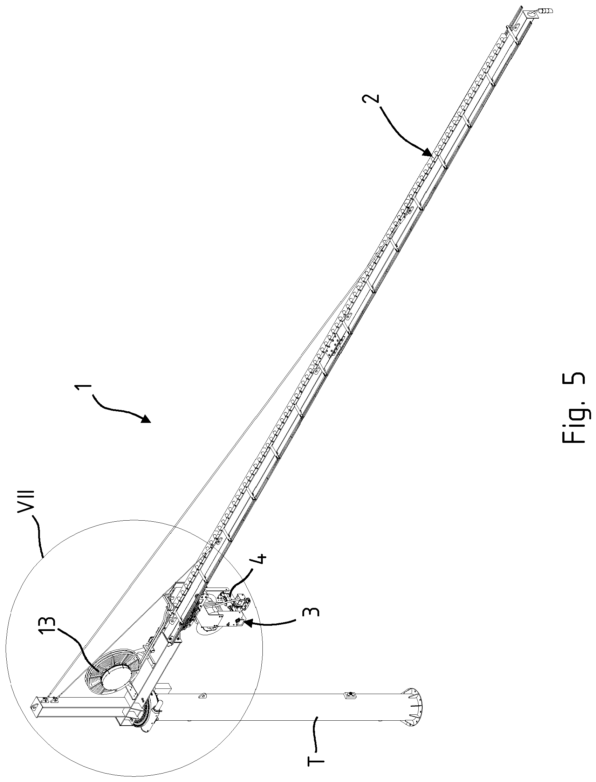

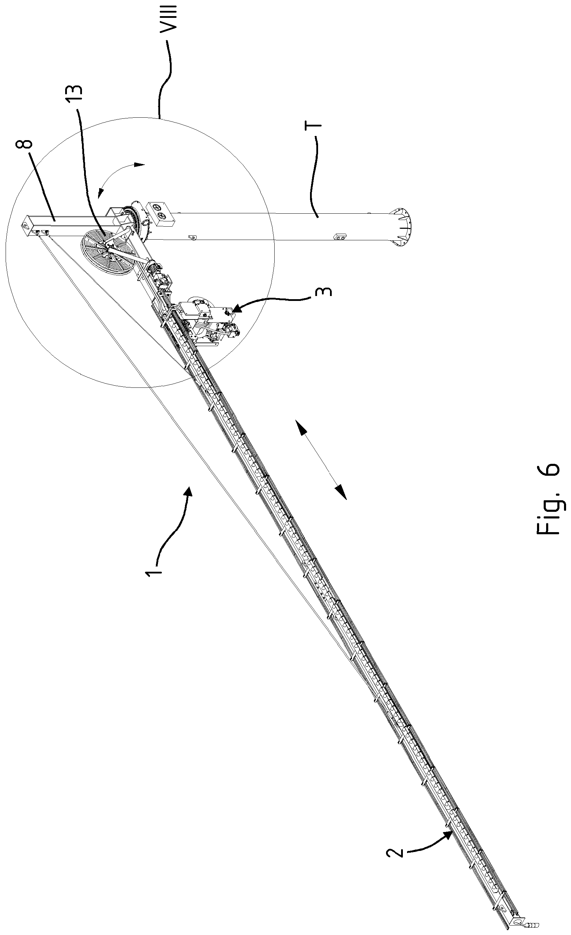

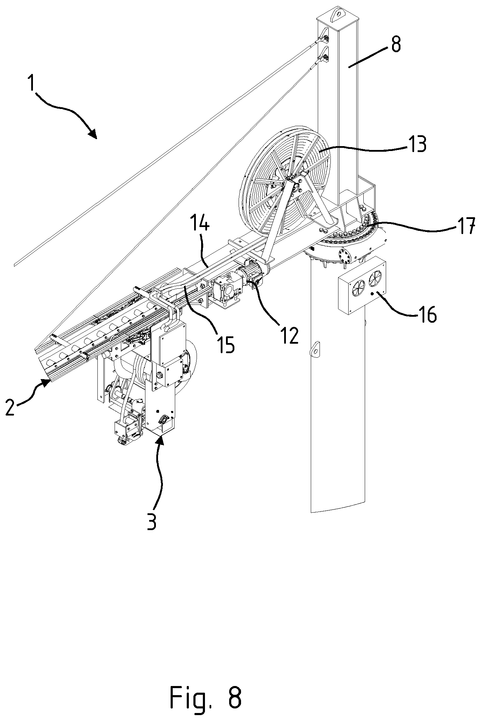

Die Erfindung wird nachfolgend anhand des in den Figuren 5 bis 8 schematisch dargestellten Ausführungsbeispiels erläutert. Die Figuren 1 bis 4 zeigen keine Ausführungsformen der Erfindung. Sie dienen zu Illustration des Erfindungsgedankens, wobei in den Figuren 5 - 8 auf die Erläuterungen der Figuren 1 bis 4 Bezug genommen wird. Die dortigen Ausführungen haben insofern auch für die erfindungsgemäße Bauform gemäß den Figuren 5 bis 8 Bedeutung, mit der Ausnahme, dass der Wärmetauscher an der Laufkatze befestigt ist bzw. dass anders als bei der erfindungsgemäßen Ausführungsform der Figuren 5 und 8 keine stationäre Schlauchtrommel zur Zu- und Ableitung einer Kühlflüssigkeit am Tragarm angeordnet ist. Es zeigen:
- Figur 1: eine erste Ausführungsform einer Leitungsführungsanordnung in einer perspektivischen Ansicht;
- Figur 2: die Ausführungsform der Leitungszuführungsanordnung aus einer anderen Perspektive;
- Figur 3: die Einzelheit III der Figur 1;
- Figur 4: die Einzelheit IV aus Figur 2;
- Figur 5: eine perspektivische Darstellung einer erfindungsgemäßen Ausführungsform einer Leitungszuführungsanordnung;
- Figur 6: Leitungszuführungsanordnung der Figur 5 in einer weiteren Perspektive;
- Figur 7: die Einzelheit VII der Figur 5 und
- Figur 8: die Einzelheit VIII der Figur 6.

Die Leitungszuführungsanordnung 1 gemäß der Figuren 1 bis 4 dient dazu, einem nicht näher dargestellten elektrisch betriebenen Kraftfahrzeug elektrische Energie zum Laden seiner Energiespeicher zur Verfügung zu stellen. Das elektrische Kraftfahrzeug ist insbesondere ein PKW oder ein LKW, insbesondere ein Nutzkraftfahrzeug. Es handelt sich bei dem Kraftfahrzeug um ein durch einen Motor angetriebenes, nicht an Schienen gebundenes Fahrzeug, also um einen Kraftwagen, ein Kraftrad oder um eine Zugmaschine.

Die Leitungszuführungsanordnung 1 besitzt einen Tragarm 2, der an einer Tragsäule T befestigt ist. Der Tragarm 2 ist am oberen Ende der Tragsäule T befestigt, sodass er in einem Abstand zum bodenseitigen Fuß der Tragsäule T angeordnet ist, der es den zu ladenden Kraftfahrzeugen erlaubt, unter dem Tragarm 2 hindurchzufahren.

Der Tragarm 2 ist länger als die Tragsäule T hoch ist. Er besitzt eine Länge von mindestens 4 m vorzugsweise sogar mindestens 8 m.

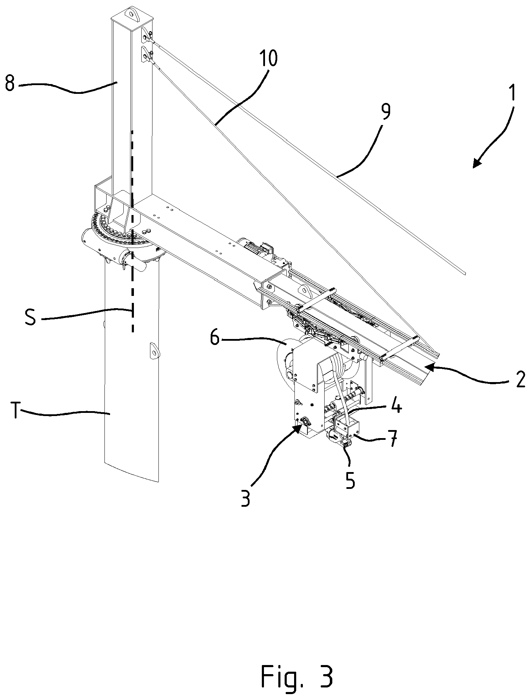

An den Tragarm 2 befindet sich eine Laufkatze 3, die in Längsrichtung des Tragarms 2 verfahrbar ist. Die Laufkatze 3 befindet sich in jeder Position am Tragarm 2 oberhalb des zu ladenden Kraftfahrzeuges. Die Laufkatze 3 dient dazu, eine elektrische Leitung 4 zum Laden eines Energiespeichers des Kraftfahrzeuges relativ zum Kraftfahrzeug in die richtige Position zu bringen. Hierzu kann der Tragarm 2 um eine Schwenkachse S in der Mitte der Tragsäule T verschwenkt werden. Dadurch ist er in Horizontalrichtung schwebend verlagerbar. Gleichzeitig ist die Laufkatze 3 in Längsrichtung zum Tragarm 2 verlagerbar, sodass innerhalb der Reichweite des Tragarmes 2 vielfältige Positionen anfahrbar sind, an denen ein Ende 5 (Figur 3) der Leitung 4 heruntergelassen werden kann, um das Fahrzeug zu laden. An dem freien Ende 5 der Leitung 4 kann ein Stecker oder eine Kupplung angeordnet sein um die Leitung 4 an das Kraftfahrzeug anzuschließen.

Nach dem Laden kann die Leitung 4 wieder aufgewickelt werden und nach oben gezogen werden. Hierzu befindet sich an der Laufkatze 3 eine Leitungstrommel 6. Bei der Leitungstrommel 6 kann es sich beispielsweise um eine Motorleitungstrommel handeln. Die Leitungstrommel 6 kann auch federbelastet sein oder mit einem Balancer ausgestattet sein, sodass die elektrische Leitung 4 leicht nach oben gezogen werden kann und niemals selbsttätig von der Leitungstrommel 6 abwickeln kann. Es ist auch denkbar, dass eine Bewegung der Leitungstrommel 6 dann freigegeben wird, wenn eine übergeordnete Steuereinheit das Signal zur Freigabe gibt, beispielsweise, wenn der Fahrzeugführer die Autorisierung bekommen hat, Strom über die Leitungszuführungsanordnung zu beziehen.

Die Leitungszuführungsanordnung 1 kann einen sehr langen Tragarm haben. Daher ist vorgesehen, dass oberhalb des Tragarms T ein Abspannarm 8 in Verlängerung der Schwenkachse S angeordnet ist. An dem Abspannarm 8 sind im Bereich seines oberen Endes zwei Abspannmittel 9, 10, z. B. in Form von Drahtseilen befestigt, die in unterschiedlichen Abständen von der Schwenkachse S oberseitig mit dem Tragarm 2 verbunden sind. Dadurch kann der Tragarm 2 schlank gestaltet sein, aber gleichzeitig hohe Lasten ohne Durchbiegung tragen. Der Abspannarm 8 ist in diesem Fall fest mit dem Tragarm 2 verbunden und zusammen mit dem Tragarm 2 um die Schwenkachse S verschwenkbar.

Die Energiezuführung zu der Laufkatze 3 erfolgt über wenigstens eine Stromschiene. Die Stromschiene steht über einen Schleifübertrager mit der Laufkatze 3 und der elektrischen Leitung 4 in elektrischem Kontakt. Die elektrische Leitung 4 zum übertragen des Stroms befindet sich daher ausschließlich auf der Leitungstrommel 6 an der Laufkatze 3.

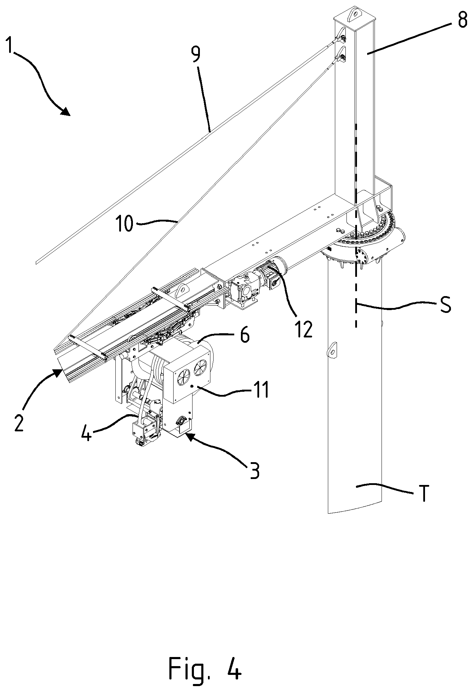

Aus der Darstellung der Figur 4 ist zu erkennen, dass an der Laufkatze 3 ein Wärmetauscher 11 befestigt ist. Die Leitung 4 ist flüssigkeitsgekühlt. Die dabei entstehende Wärme wird über den Wärmetauscher 11 an die Umgebungsluft abgeführt. Der Wärmetauscher 11 ist in der Nähe der Leitung 4 angeordnet, damit die Wärme unmittelbar vor Ort abgeführt werden kann. Die Leitung 4 kann dadurch relativ kurz ausfallen. Sie muss nur den Abstand von der Laufkatze 3 zum Boden bzw. zur Anschlussstelle des Fahrzeuges in Hochrichtung überbrücken. Dadurch kann die ganze Laufkatze 3 vergleichsweise leicht gestaltet sein. Figur 4 zeigt ferner einen Antrieb 12 umfassend einen Motor und ein Getriebe, über welchen die Laufkatze 3 angetrieben und entlang des Tragarms 2 verfahrbar ist.

Die Figuren 5 bis 8 zeigen ein erfindungsgemäßes Ausführungsbeispiel, bei welchem die zuvor eingeführten Bezugszeichen für im Wesentlichen baugleiche Komponenten beibehalten werden. Darüber hinaus kann auf die vorstehende Beschreibung Bezug genommen werden.

Ein Unterschied gegenüber der ersten Ausführungsform besteht darin, dass die Energiezuführung zur Laufkatze 3 nicht über eine Stromschiene erfolgt, sondern über eine Schlauchtrommel 13. Diese Schlauchtrommel befindet sich auf dem Träger 2, allerdings stationär in der Nähe der Tragsäule T.

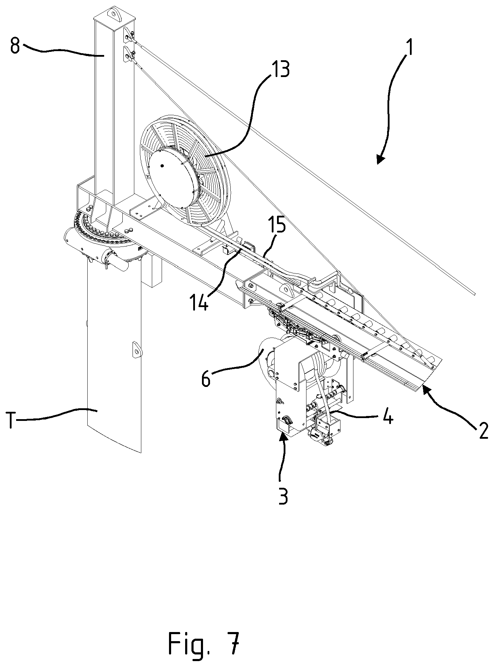

Die Schlauchtrommel 13 dient zur Zu- und Ableitung einer Kühlflüssigkeit zur und von der elektrischen Leitung 4 an der Laufkatze 3. Die Figuren 7 und 8 zeigen, dass gleichzeitig zwei Schläuche auf- und abgewickelt werden. Diese beiden Schläuche 14, 15 führen zu der Laufkatze 3 und zu der dort angeordneten elektrischen Leitung 4 zum Laden des Kraftfahrzeuges. Je nach Portion der Laufkatze 4 werden die Schläuche 14, 15 auf- oder abgewickelt Es ist im Rahmen der Erfindung möglich, dass auch die Übertragung der elektrischen Energie über einen der Schläuche 14, 15 erfolgt. Denkbar ist aber auch, dass die Schläuche 14, 15 lediglich eine Kühlflüssigkeit, insbesondere Kühlwasser führen, das in einem Wärmetauscher 16 an der Tragsäule T gekühlt wird. Der Wärmetauscher 16 ist in nicht näher dargestellter Weise mit den Schläuchen 14, 15 verbunden. Hierzu besitzt die Schlauchtrommel 13 doppelte Drehdurchführungen.

Der Wärmetauscher 16 kann auch im Abstand von der Tragsäule T angeordnet sein. Vorzugsweise befindet sich der Wärmetauscher 16 in einem Bereich, der es ermöglicht, zusammen mit dem Tragarm 2 verschwenkt zu werden.

Im Bereich eines Drehlagers 17 an der Oberseite der Tragsäule T kann eine Kabeldurchführung für die elektrische Energieversorgung, aber auch für kühlmittelführende Leitungen angeordnet sein. Damit die Leitungen beim Verschwenken nicht beschädigt wird, kann die Schwenkbewegung des Tragarms 2 begrenzt werden. Es ist aber auch denkbar, zumindest für die elektrische Zuleitung einen Schleifringübertrager im Bereich des Drehlagers vorzusehen. Auch können über weitere Schleifkontakte Steuersignale zu der Laufkatze 3 oder auch zu dem Antrieb 12 der Laufkatze 3 übermittelt werden.

### Bezugszeichen:

- 1 -: Leitungszuführungsanordnung
- 2 -: Tragarm
- 3 -: Laufkatze
- 4 -: elektrische Leitung
- 5 -: Verbinder
- 6 -: Leistungstrommel
- 7 -: Kabelführung
- 8 -: Abspannarm
- 9 -: Abspannmittel
- 10 -: Abspannmittel
- 11 -: Wärmetauscher
- 12 -: Antrieb für 3
- 13 -: Schlauchtrommel
- 14 -: Schlauch
- 15 -: Schlauch
- 16 -: Wärmetauscher
- 17 -: Drehlager
- S -: Schwenkachse
- T -: Tragsäule

## Patentansprüche

1. Leitungszuführungsanordnung für elektrisch angetriebene Kraftfahrzeuge umfassend folgende Merkmale:
a. Eine elektrische Leitung (4) zum Laden eines Energiespeichers des Kraftfahrzeuges ist an einem Tragarm (2) angeordnet; wobei der Tragarm (2) an einer Tragsäule (T) angeordnet ist;
b. am Tragarm (2) befindet sich eine Laufkatze (3) für die Positionierung der Leitung (4);
c. die Laufkatze (3) ist relativ zum Tragarm (2) in Horizontalrichtung verlagerbar oder der Tragarm (4) ist in Horizontalrichtung verlagerbar und die Laufkatze (3) ist relativ zum Tragarm (2) in Horizontalrichtung verlagerbar;
d. die Laufkatze (3) ist dazu ausgebildet, sich in einer Höhe oberhalb des zu ladenden Kraftfahrzeuges zu befinden;
e. ein freies Ende (5) der Leitung (4) hängt von der Laufkatze (3) an dem Tragarm (2) herunter, um von oben kommend zum Laden an das Kraftfahrzeug angeschlossen zu werden;
f. die Leitung (4) ist flüssigkeitsgekühlt;
**gekennzeichnet durch** folgende Merkmale:
g. wenigstens eine Schlauchtrommel (13) ist am Tragarm (2) stationär in der Nähe zur Tragsäule (T) angeordnet und dient zur Zu- und Ableitung einer Kühlflüssigkeit zur und von der elektrischen Leitung (4) an der relativ zur Schlauchtrommel (13) verlagerbaren Laufkatze (3), wobei eine Leitungstrommel (6) für die Leitung (4) an der Laufkatze (3) angeordnet ist, um das freie Ende (5) der Leitung (4) zum Kraftfahrzeug abzusenken;
h. ein Wärmetauscher (16) zum Kühlen der Kühlflüssigkeit ist entfernt von der Laufkatze (3) angeordnet.

2. Leitungszuführungsanordnung nach Anspruch 1, **dadurch gekennzeichnet, dass** der Tragarm (2) um eine vertikale Schwenkachse (S) verschwenkbar ist.

3. Leitungszuführungsanordnung nach Anspruch 1 oder 2, **dadurch gekennzeichnet, dass** der Tragarm (2) gegenüber der Tragsäule (T) verschwenkbar ist.

4. Leitungszuführungsanordnung nach Anspruch 1, **dadurch gekennzeichnet, dass** der Tragarm (2) linear in Horizontalrichtung gegenüber einer Tragkonstruktion verlagerbar ist.

5. Leitungszuführungsanordnung nach einem der Ansprüche 1 bis 4, **gekennzeichnet durch** einen motorischen Antrieb (12) zum Bewegen des Tragarmes (2) und/oder zum Bewegen der Laufkatze (3).

6. Leitungszuführungsanordnung nach einem der Ansprüche 1 bis 5, **dadurch gekennzeichnet, dass** an dem Tragarm (2) eine Stromschiene angeordnet ist, wobei die Leitung (4) über die Laufkatze (3) elektrisch mit der Stromschiene verbunden ist.

7. Leitungszuführungsanordnung nach einem der Ansprüche 1 bis 6, **dadurch gekennzeichnet, dass** die Leitungstrommel (6) eine Federleitungstrommel, eine Motorleitungstrommel oder eine Gegengewichtstrommel ist oder wobei die Leitung (4) mit einem Gewichtsausgleicher verbunden ist.

8. Leitungszuführungsanordnung nach einem der Ansprüche 1 bis 7, **dadurch gekennzeichnet, dass** eine einzige Schlauchtrommel (13) vorgesehen ist mit einer doppelten Drehdurchführung zum Zuleiten und Ableiten von Kühlflüssigkeit.

9. Leitungszuführungsanordnung nach einem der Ansprüche 1 bis 8, **dadurch gekennzeichnet, dass** die Schlauchtrommel (13) einen Schleifringübertrager aufweist, wobei über die Schlauchtrommel (13) auch die elektrische Leitung geführt ist.

## Claims

1. Line supply arrangement for electrically driven motor vehicles, comprising the following features:
a. an electric line (4) for charging an energy store of the motor vehicle is arranged on a support arm (2); wherein the support arm (2) is arranged on a support column (T);
b. a trolley (3) is arranged on the support arm (2) for positioning the line (4);
c. the trolley (3) is displaceable relative to the support arm (2) in the horizontal direction or the support arm (4) is displaceable in the horizontal direction and the trolley (3) is displaceable relative to the support arm (2) in the horizontal direction;
d. the trolley (3) is designed to be located at a height above the motor vehicle to be charged;
e. a free end (5) of the line (4) hangs down from the trolley (3) on the support arm (2) in order to be connected from above to the motor vehicle for charging;
f. the line (4) is liquid-cooled;
**characterised by** the following features:
g. at least one hose reel (13) is stationarily arranged on the support arm (2) near the support column (T) and is used for supply and discharge of a cooling liquid to and from the electric line (4) on the trolley (3), which is movable relative to the hose reel (13), wherein a line reel (6) for the line (4) is arranged on the trolley (3) in order to lower the free end (5) of the line (4) to the motor vehicle;
h. a heat exchanger (16) for cooling the cooling liquid is arranged at a distance from the trolley (3).

2. Line supply arrangement according to claim 1, **characterised in that** the support arm (2) is pivotable about a vertical pivot axis (S).

3. Line supply arrangement according to claim 1 or 2, **characterised in that** the support arm (2) is pivotable relative to the support column (T).

4. Line supply arrangement according to claim 1, **characterised in that** the support arm (2) is displaceable linearly in the horizontal direction with respect to a support structure.

5. Line supply arrangement according to any one of claims 1 to 4, **characterised by** a motorised drive (12) for moving the support arm (2) and/or for moving the trolley (3).

6. Line supply arrangement according to any one of claims 1 to 5, **characterised in that** a conductor rail is arranged on the support arm (2), wherein the line (4) is electrically connected to the conductor rail via the trolley (3).

7. Line supply arrangement according to any one of claims 1 to 6, **characterised in that** the line reel (6) is a spring line reel, a motor line reel or a counterweight reel or wherein the line (4) is connected to a weight equaliser.

8. Line supply arrangement according to any one of claims 1 to 7, **characterised in that** a single hose reel (13) is provided with a double rotary feedthrough for supplying and discharging cooling liquid.

9. Line supply arrangement according to any one of claims 1 to 8, **characterised in that** the hose reel (13) has a slip ring transformer, wherein the electrical line is also routed via the hose reel (13).

## Revendications

1. Ensemble d'amenée de câble pour des véhicules automobiles à entraînement électrique comprenant les caractéristiques suivantes :
a. un câble électrique (4) pour charger un accumulateur d'énergie du véhicule automobile est disposé sur un bras de support (2) ; dans lequel le bras de support (2) est disposé sur une colonne de support (T) ;
b. sur le bras de support (2) se trouve un chariot roulant (3) pour le positionnement du câble (4) ;
c. le chariot roulant (3) peut être déplacé par rapport au bras de support (2) dans la direction horizontale ou le bras de support (4) peut être déplacé dans la direction horizontale et le chariot roulant (3) peut être déplacé par rapport au bras de support (2) dans la direction horizontale ;
d. le chariot roulant (3) est conçu pour se situer à une hauteur au-dessus du véhicule automobile à charger ;
e. une extrémité libre (5) du câble (4) pend depuis le chariot roulant (3) sur le bras de support (2), pour être raccordée depuis le haut au véhicule automobile pour le chargement ;
f. le câble (4) est refroidi par un liquide ;
**caractérisé par** les caractéristiques suivantes :
g. au moins un enrouleur de tuyau (13) est disposé de manière fixe sur le bras de support (2) à proximité de la colonne de support (T) et sert à alimenter et à évacuer d'un liquide de refroidissement vers et depuis le câble électrique (4) sur le chariot roulant (3) pouvant être déplacé par rapport à l'enrouleur de tuyau (13), dans lequel un enrouleur de câble (6) est disposé pour le câble (4) sur le chariot roulant (3), pour abaisser l'extrémité libre (5) du câble (4) vers le véhicule automobile ;
h. un échangeur de chaleur (16) est disposé à distance du chariot roulant (3) pour refroidir le liquide de refroidissement.

2. Ensemble d'amenée de câble selon la revendication 1, **caractérisé en ce que** le bras de support (2) peut pivoter autour d'un axe de pivotement (S) vertical.

3. Ensemble d'amenée de câble selon la revendication 1 ou 2, **caractérisé en ce que** le bras de support (2) peut pivoter par rapport à la colonne de support (T).

4. Ensemble d'amenée de câble selon la revendication 1, **caractérisé en ce que** le bras de support (2) peut être déplacé linéairement dans la direction horizontale par rapport à une structure porteuse.

5. Ensemble d'amenée de câble selon l'une quelconque des revendications 1 à 4, **caractérisé par** un entraînement motorisé (12) pour déplacer le bras de support (2) et/ou pour déplacer le chariot roulant (3).

6. Ensemble d'amenée de câble selon l'une quelconque des revendications 1 à 5, **caractérisé en ce qu'**une barre conductrice est disposée sur le bras de support (2), dans lequel le câble (4) est relié électriquement par le biais du chariot roulant (3) à la barre conductrice.

7. Ensemble d'amenée de câble selon l'une quelconque des revendications 1 à 6, **caractérisé en ce que** l'enrouleur de câble (6) est un enrouleur de câble à ressort, un enrouleur de câble pour moteur ou un enrouleur à contrepoids ou dans lequel le câble (4) est relié à un équilibreur de poids.

8. Ensemble d'amenée de câble selon l'une quelconque des revendications 1 à 7, **caractérisé en ce qu'**un enrouleur de tuyau (13) est prévu avec un double joint tournant pour alimenter et évacuer le liquide de refroidissement.

9. Ensemble d'amenée de câble selon l'une quelconque des revendications 1 à 8, **caractérisé en ce que** l'enrouleur de tuyau (13) présente un transmetteur à bague collectrice, dans lequel le câble électrique passe également par l'enrouleur de tuyau (13).
